# EUROPEAN PATENT SPECIFICATION

(11) **EP 3 335 944 B1**
(45) Date of publication and mention of the grant of the patent: **11.08.2021**
(21) Application number: 17000886.6
(22) Date of filing: 23.05.2017
(51) Int. Cl.: B60R 99/00, A01B 69/00

(54) **WORK VEHICLE**
NUTZFAHRZEUG
VÉHICULE DE TRAVAIL

(30) Priority: 19.12.2016 JP 2016245943
(43) Date of publication of application: 20.06.2018
(73) Proprietor: Kubota Corporation, Osaka 556-8601 (JP)
(72) Inventor: Matsuzaki, Yushi, Osaka, 5900823 (JP)
(74) Representative: Müller-Boré & Partner Patentanwälte PartG mbB

(56) References cited:
- US-A1- 2011 074 916
- US-A1- 2013 147 958
- US-A1- 2016 200 252
- US-A1- 2016 301 864

## Description

### [Technical Field]

The present invention relates to a work vehicle that is able to display a periphery of the work vehicle including a vehicle body and work equipment attached to the vehicle body on a display unit as an overhead image.

### [Background Art]

In a combine according to JP 2015-104375 A generates, from peripheral images of the vehicle obtained by four cameras, an overhead image that is a pseudo-image viewed from above the vehicle and synthesizes the overhead image with a plan view image of the vehicle stored in a storage unit and an image showing a position of a crawler unit stored in the storage unit, as well as with crawler virtual extensions that are lines extending forward from left and right ends of the crawler unit. The synthesized image is then displayed. When displaying, in case the combine is determined to be traveling forward, the crawler virtual extensions are displayed to be extending forward. In case the combine is determined to be traveling backward, the crawler virtual extensions are displayed to be extending backward. In US 2016/301864 A1, an image processing system is described for a machine having a first section pivotally connected to a second section. The system may include a plurality of cameras mounted on the first section and configured to capture image data of an environment around the machine. The machine further includes a display and a processing device. The processing device may obtain, from the image data, information indicative of a rotation of the first section relative to the second section. Based on the information, the processing device may adjust the image data to account for the rotation of the first section relative to the second section. The processing device may use the adjusted image data to generate a surround-view image of the environment. The processing device may also render the surround-view image on the display.

### [Summary of the Invention]

The present invention is specified by the independent claims. Preferred embodiments result from the dependent claims.

### [Problem to be Solved by the Invention]

In the work vehicle (e.g. combine) as described above, a periphery of the crawler unit can be grasped intuitively via the displayed overhead image. However, the overhead image being a synthesized image of images captured by the cameras can only cover an area with relatively short distances from the vehicle body and the overhead image is distorted by changes in the vantage point. As a result, specific components on the periphery of the originally captured images can be difficult to be seen in the overhead image. In particular, assume that a work vehicle includes a vehicle body and work equipment of different sizes to be attached to the vehicle body. If the overhead image is adapted to small work equipment, in case large work equipment is attached to the vehicle body, the work equipment cannot be fully included in the overhead image and, thus, peripheral monitoring will be inadequate. Conversely, if the overhead image is adapted to large work equipment, in case small work equipment is attached to the vehicle body, an area that requires no monitoring will be large and a display area of the display unit will be wasted.
Given this situation, a technology is desired which enables a driver and/or an observer to visually well recognize work equipment using an appropriate overhead image of a periphery of a work vehicle including the work equipment.

### [Means for Solving the Problem]

According to one aspect, a work vehicle comprising a vehicle body and work equipment attached to the vehicle body according to claim 1 is provided. The work vehicle comprises: a plurality of cameras configured to image partial peripheral areas allocated from a peripheral area of the vehicle body and the work equipment; a monitoring image generating module configured to synthesize partial overhead images from each camera on the basis of a modifiable synthesizing pattern, thereby generating a peripheral overhead image overlooking the peripheral area, the partial overhead images being generated by changing vantage points of captured images of the partial peripheral areas from each camera; a synthesizing pattern modifying unit configured to modify the synthesizing pattern; and a display unit configured to display the peripheral overhead image.

In various embodiments and examples described herein, the "peripheral area" of the vehicle body and the work equipment may be understood as indicating an area at least partially surrounding the vehicle body and/or the work equipment. In other words, the "peripheral area" of the vehicle body and the work equipment may include an area proximate to the vehicle body and/or the work equipment.

Further, in various embodiments and examples described herein, a "partial peripheral area" may be understood as indicating a part of the "peripheral area".

In this configuration, an overhead image conforming to the orientation and/or size of the work equipment attached to the vehicle body can be generated by modifying the synthesizing pattern. In this way, the periphery of the work vehicle including the work equipment can be monitored properly, which may lead to appropriate operation of the work vehicle. For example, in some circumstances, by taking the overhead image displayed on the display unit into consideration, the driver of the work vehicle can operate the work vehicle more appropriately (e.g. more easily avoiding contact of the work vehicle with an obstacle in the field, more accurately following a desired travel course etc.). Accordingly, in some circumstances, displaying an overhead image as defined by the above-stated aspect may provide an improved, continued man-machine interaction.

The synthesizing pattern may be configured so as to specify occupied areas of the partial overhead images in the peripheral overhead image. In this way, when large work equipment is attached to the vehicle body, the occupied area of the partial overhead image including the work equipment can be modified on the basis of the size of the work equipment to ensure the work equipment and its periphery to be included in the partial overhead image. Work can then be performed while viewing an appropriate peripheral overhead image conforming to the orientation and/or size of the work equipment.

The appropriate proportion of the partial overhead images in the peripheral overhead image may vary depending also on user preferences. Therefore, in some examples, the synthesizing pattern modifying unit may be configured to modify the synthesizing pattern on the basis of one or more modification commands received from an input operation device. In this way, an overhead image that is appropriate and easy for a user (such as a driver) to view can be displayed on the display unit.

When modification operation on the synthesizing pattern is performed by the user from a narrow driver's seat or the like, the modification operation environment may be desired to be user-friendly. Therefore, in some examples, the input operation device may be a touch panel, and said one or more modification commands may be generated by changing positions of image boundary lines between the partial overhead images in the peripheral overhead image displayed on the touch panel. In this configuration, the user can change the image boundary lines displayed on the touch panel by a drag-and-drop operation so that desired modifications can be made to the synthesizing pattern, which may result in achieving desired proportions of the partial overhead images in the peripheral overhead image.

According to the invention, appropriate modifications to the synthesizing pattern are made automatically and not manually by the user in response to the work equipment attached to the vehicle body. In order to achieve this purpose, the work vehicle also includes a recognition unit configured to recognize a type of the work equipment, and the synthesizing pattern modifying unit is configured to modify the synthesizing pattern on the basis of one or more recognition results from the recognition unit.

In case of some special work equipment, the size of the work equipment in the overhead image may depend on a state of use. For example, the width of planting equipment in a rice transplanter may depend on the number of units being used in the planting equipment. Further, with tilling equipment or bucket equipment or the like attached to a tractor, the size of the equipment and/or positional relationship with respect to the vehicle body in the overhead image may depend on a lifting position of the equipment. In case of such work equipment, the synthesizing pattern may be preferably changed automatically also during operation. Therefore, in some examples, the work vehicle may also include a usage state detecting sensor configured to detect a usage state of the work equipment, and the synthesizing pattern modifying unit may be configured to modify the synthesizing pattern on the basis of one or more detection results from the usage state detecting sensor.

The work vehicle may be displayed schematically in the center of the peripheral overhead image displayed on the display unit. In this case, it may be desirable that, from the work equipment that is displayed, the work equipment actually attached to the vehicle body can be visually recognized as realistically as possible and at least the size of the work equipment can be recognized. Therefore, in some examples, a work vehicle schematic may be provided in a center of the peripheral overhead image, the work vehicle schematic may include a vehicle body schematic showing the vehicle body and a work equipment schematic showing the work equipment, and a size of the work equipment schematic may be modified as the synthesizing pattern is modified. In this way, the user can accurately monitor the periphery of the work equipment from the peripheral overhead image displayed on the display unit. According to another aspect, a method for generating a peripheral overhead image overlooking a peripheral area of a vehicle body and work equipment attached to the vehicle body according to claim 7 is provided. The method comprises the following:
receiving, by a control unit from a plurality of cameras attached to the vehicle body, captured images of partial peripheral areas allocated from the peripheral area of the vehicle body and the work equipment;
generating, by the control unit, partial overhead images from each camera by changing vantage points of the captured images of the partial peripheral areas from each camera;
synthesizing, by the control unit, the partial overhead images from each camera on the basis of a modifiable synthesizing pattern, thereby generating a peripheral overhead image overlooking the peripheral area;
providing the peripheral overhead image from the control unit to a display unit for displaying the peripheral overhead image on the display unit;
modifying the synthesizing pattern by the control unit, on the basis of one or more recognition results from a recognition unit that is comprised in the work vehicle and that is configured to recognize a type of work equipment; and
generating, by the control unit, a modified peripheral overhead image overlooking the peripheral area by synthesizing the partial overhead images from each camera on the basis of the modified synthesizing pattern.

According to an example useful to understand the present invention, a system for generating a peripheral overhead image overlooking a peripheral area of a vehicle body and work equipment attached to the vehicle body is provided. The system may comprise: a control unit configured to perform the method according to any of the above-stated aspect and examples; and a display unit configured to display the peripheral overhead image.

According to yet another aspect, a computer program product comprising computer-readable instructions that, when loaded and run on a computer, cause the computer to perform the method according to any of the above-stated aspect and examples.

The subject matter described in the application can be implemented as a method, possibly in the form of one or more computer program products. The subject matter described in the application can be implemented in a data signal or on a machine readable medium, where the medium is embodied in one or more information carriers, such as a CD-ROM, a DVD-ROM, a semiconductor memory, or a hard disk. Such computer program products may cause a data processing apparatus to perform one or more operations described in the application.

In addition, subject matter described in the application can also be implemented as a system including a processor, and a memory coupled to the processor. The memory may encode one or more programs to cause the processor to perform one or more of the methods described in the application. Further subject matter described in the application can be implemented using various machines.

### [Brief Description of the Drawings]

Details of one or more implementations are set forth in the exemplary drawings and description below. Other features will be apparent from the description, the drawings, and from the claims. It should be understood, however, that even though embodiments are separately described, single features of different embodiments may be combined to further embodiments.

**FIG. 1** is a side view of a tractor with tilling equipment attached thereto, which is an example of a work vehicle with work equipment attached thereto.
**FIG. 2** is a functional block diagram of a control system of the tractor.
**FIG. 3** is an explanatory diagram showing a flow of control to generate a peripheral overhead image, using a synthesizing pattern, based on captured images of a peripheral of a vehicle obtained by four cameras in which the controls are generated.
**FIG. 4** is a schematic diagram showing modifications to a synthesizing pattern using a touch panel.

### [Mode for Carrying Out the Invention]

In the following text, a detailed description of examples will be given with reference to the drawings. It should be understood that various modifications to the examples may be made. In particular, elements of one example may be combined and used in other examples to form new examples.

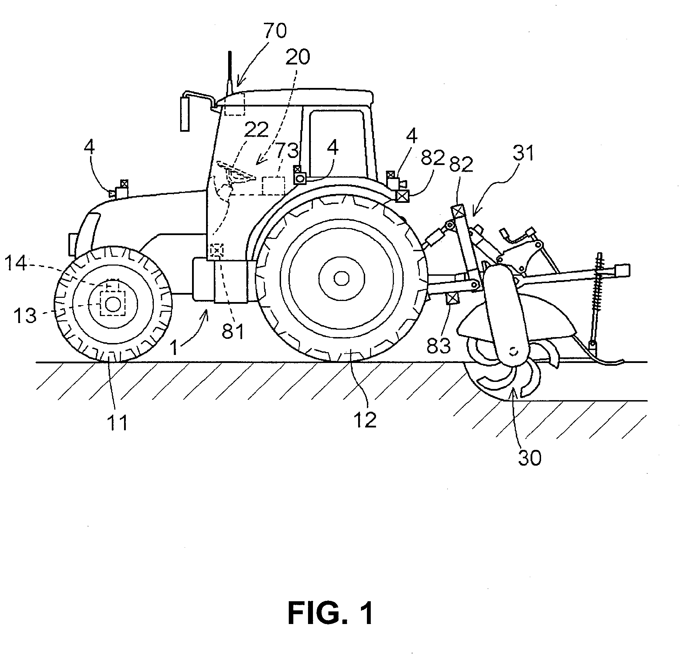

Next, a specific embodiment of a work vehicle of the present invention is described with reference to the drawings. In the present embodiment, the work vehicle may be a tractor which performs work using work equipment while traveling through a field (work site). As shown in FIG. 1, the exemplary tractor is provided with a steering unit 20 in the center of a vehicle body 1 supported by front wheels 11 and rear wheels 12. Work equipment 30, which in this example is rotary tilling equipment, is attached to the rear of the vehicle body 1 via a hydraulic lifting mechanism 31. The front wheels 11 function as the steering control wheels, and the traveling direction of the tractor is changed by changing the steering angle. The steering angle of the front wheels 11 is changed by operating a steering mechanism 13. A steering motor 14 is included in the steering mechanism 13 for automatic steering. During manual operation, the front wheels 11 can be steered by turning the steering wheel 22 arranged inside the steering unit 20. In the steering unit 20, a touch panel 73 (one example of a display unit) is provided, the touch panel 73 having a function of a notification device that provides information to the driver and a function of an input operation device that is operated by the driver.

A satellite positioning module 70 in the form of a global navigation satellite system (GNSS) module is provided in a cabin 21 of the tractor. As a constituent element of the satellite positioning module 70, a satellite antenna is mounted in a ceiling area of the cabin 21 to receive GNSS signals (including GPS signals). The satellite positioning module 70 can also include an inertial navigation module incorporating a gyro acceleration sensor and/or a magnetic direction sensor to complement satellite navigation. The inertial navigation module can of course be provided in a separate location from the satellite positioning module 70.

In the example shown in FIG. 1, four cameras 4 for imaging the periphery of the vehicle body are mounted on the vehicle body 1. In various embodiments and examples described herein, the "periphery" of the vehicle body may be understood as indicating an area proximate to the vehicle body and/or an area at least partially surrounding the vehicle body. In the example shown in FIG. 1, the first camera 4 is arranged in the center of a front portion (hood) of the vehicle body, the second camera 4 and the third camera 4 are arranged on left and right sides (rear wheel fenders) of the vehicle body, and the fourth camera 4 is arranged in the center of a rear portion (rear end of the cabin) of the vehicle body. Each camera 4 may capture, using an imaging element such as a charge-coupled device (CCD) and/or CMOS image sensor (CIS), two-dimensional images in chronological order at a speed of 15 to 30 frames per second, convert the images to digital images, and output the captured images in real time. The imaging optical axis of each camera 4 may face downward so that a part of the vehicle body 1 and/or the work equipment 30 as well as a field surface can be included in the field of view, and a wide-angle lens may be attached so that captured images of partial peripheral areas obtained by the four cameras 4 can cover the entire periphery near the vehicle body.

Further, the tractor may be equipped with traveling state detecting sensors 81 for detecting one or more states of the engine, transmission and/or steering mechanism 13 etc., with working state detecting sensors 82 for detecting one or more states such as the orientation and/or position of the lifting mechanism 31 and/or work equipment 30, and with a recognition unit 83 for recognizing a type of the work equipment 30 attached to the vehicle body 1. The working state detecting sensors 82 may include, but are not limited to, usage state detecting sensors for detecting one or more usage states such as orientation, ground clearance, and/or utilized width of the work equipment 30. The recognition unit 83 may have a function to mechanically or electronically read an identification code of the work equipment 30 and derive, from the read identification code, one or more work equipment attribute values such as the type and/or size of the work equipment as recognition results.

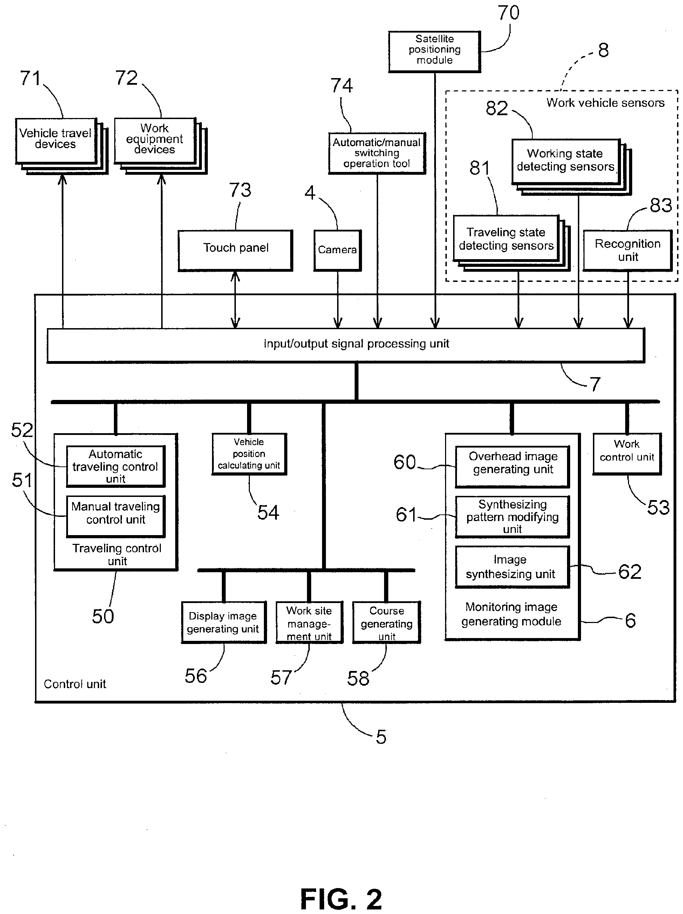

FIG. 2 shows an exemplary control system that may be built into the tractor. In the exemplary control system, technology is incorporated to display a peripheral overhead image created from captured images of a peripheral area of the work vehicle (e.g. the vehicle body 1 and the work equipment 30) captured by the plurality of cameras 4 (four cameras in the present embodiment), on a touch panel 73 serving as the display unit. In a control unit 5 which may be the main component of the exemplary control system, an input/output signal processing unit 7 is provided, which functions as an input/output interface. Output signal ports of the input/output signal processing unit 7 may be connected to vehicle travel devices 71, work equipment devices 72, the touch panel 73, and one or more notification devices such as a lamp and/or speaker used to call attention of the driver and/or observer during operation. The vehicle travel devices 71 may include, but are not limited to, the steering motor 14 and one or more other devices such as a transmission mechanism and/or engine unit which are not shown in the drawing but are controlled for vehicle operation. The work equipment devices 72 may include, but are not limited to, a drive mechanism for the work equipment 30 and/or a lifting mechanism 31 used to raise and lower the work equipment 30, etc.

Input signal ports of the input/output signal processing unit 7 may be connected to the above-stated cameras 4, the satellite positioning module 70, work vehicle sensors 8, and an automatic/manual switching operation tool 74. The work vehicle sensors 8 may include, but are not limited to, the traveling state detecting sensors 81 and/or the working state detecting sensors 82, and may further include the recognition unit 83 which has the function to read an identification code of the attached work equipment 30. The traveling state detecting sensors 81 may include, but are not limited to, sensors for detecting the traveling state such as the steering angle, the engine speed, and/or the transmission state. The working state detecting sensors 82 may include, but are not limited to, sensors such as sensors for detecting the orientation and/or position of the work equipment 30. The automatic/manual switching operation tool 74 may be a switch allowing the user to switch between an automatic traveling mode for traveling with automatic steering and a manual traveling mode for traveling with manual steering. For example, by operating the automatic/manual switching operation tool 74 during the automatic steering mode, the traveling mode can be switched to the manual steering mode. Further, for example, by operating the automatic/manual switching operation tool 74 during the manual steering mode, the traveling mode can be switched to the automatic steering mode.

While not shown in the drawings, a communication unit may also be connected to the input/output signal processing unit 7. The communication unit may be configured to exchange data with one or more external computers via a wireless communication standard and/or a wired communication standard. The one or more external computers may include, but are not limited to, a management computer installed at a remote management center or the like as well as a tablet and/or smartphone (e.g. mobile phone) carried by the driver and/or observer.

In the exemplary configuration shown in FIG. 2, a traveling control unit 50 that controls the vehicle travel devices 71 includes a manual travel control unit 51 and an automatic travel control unit 52, since in this example the tractor is configured to be operable to travel either in the automatic travel (e.g. automatic steering) mode or the manual travel (e.g. manual steering) mode. The manual travel control unit 51 may control the vehicle travel devices 71 based on operations performed by the driver. The automatic travel control unit 52 may generate one or more automatic steering commands based on deviations between vehicle positions and a travel course, and output these commands via the input/output signal processing unit 7 to the steering motor 14. A work control unit 53 may output one or more control signals to the work equipment devices 72 to control the operation of the work equipment 30.

The traveling control unit 50 may perform different control procedures during automatic travel and manual travel. During automatic travel, the traveling control unit 50 may achieve a function to compare and evaluate a vehicle position calculated by a vehicle position calculating unit 54 and the travel course generated by a course generating unit 58. When the vehicle position has deviated from the travel course, steering change data may be generated and outputted to the automatic travel control unit 52 so that the vehicle body 1 travels along the travel course. The vehicle position calculating unit 54 may calculate the vehicle position on the basis of satellite positioning data sent from the satellite positioning module 70. During manual travel, operation travel may be performed by operations of the steering wheel 22 and/or the brakes etc. by the driver. At this time, the travel course and the vehicle position can be displayed on the touch panel 73 and/or one or more external displays as travel guidance.

A work site management unit 57 may manage field information (e.g. work site information) which is information related to the field in which the work is performed. The field information may include, but is not limited to, data such as a map location, shape, and/or size of the field, as well as a type of crop in the field. The field information can be provided to the work site management unit 57, for example, by downloading from one or more computers installed at a remote management site and/or at a farmer's residence, by downloading from a portable device carried by the driver, and/or by reading from storage medium such as a USB memory.

The course generating unit 58 may read outline data of the field from the field information and generates a travel course suitable for the field. The travel course can be generated automatically based on basic initial parameters inputted by the driver or can be generated by another computer and downloaded. In any case, the travel course obtained by the course generating unit 58 can be developed in the memory and used by the work vehicle, regardless of whether the travel is performed under automatic steering or manual steering, in order for the work vehicle to travel along the travel course.

The control unit 5 may include a monitoring image generating module 6 that generates a peripheral overhead image, as a control function particularly related to the present invention. The monitoring image generating module 6 may include an overhead image generating unit 60, a synthesizing pattern modifying unit 61, and an image synthesizing unit 62. In the example shown in FIG. 2, the synthesizing pattern modifying unit 61 is incorporated into the monitoring image generating module 6. The monitoring image generating module 6 may have basic image processing functions, an overhead image generating function, and/or an overhead image synthesizing functions. The synthesizing pattern modifying unit 61 may be a functional unit that performs adjustments of the synthesizing process, and the synthesizing pattern modifying unit 61 may be configured separately from the monitoring image generating module 6. The overhead image generating unit 60 may change vantage points of the images captured by the four cameras 4 to a vantage point above the center of the vehicle body, and generate a partial overhead image for each camera 4. These partial overhead images may have image regions which overlap with each other, and, by synthesizing these partial overhead images to join together, a peripheral overhead image which is an overhead image of the entire periphery of the tractor can be generated. These four partial overhead images can be joined together in different ways, and, depending on the manner in which these images are synthesized to join together, an area in the peripheral overhead image occupied by each of the partial overhead images can change. The way in which these images are synthesized to join together is referred to herein as a synthesizing pattern. The synthesizing pattern may determine the area of the peripheral overhead image occupied by each of the partial overhead images. The proportion of each partial overhead image in the peripheral overhead image can be changed by altering the synthesizing pattern. The image synthesizing unit 62 may synthesize the four partial overhead images based on the synthesizing pattern set by the synthesizing pattern modifying unit 61 and generate a peripheral overhead image. The synthesizing pattern modifying unit 61 may prepare a plurality of synthesizing patterns beforehand, select an appropriate synthesizing pattern from among the plurality of synthesizing patterns and input the selected synthesizing pattern to the image synthesizing unit 62. Alternatively or additionally, the synthesizing pattern modifying unit 61 may adjust one or more existing basic synthesizing patterns to generate an appropriate synthesizing pattern and input the appropriate synthesizing pattern to the image synthesizing unit 62.

The control unit 5 may be implemented by a computer comprising a processor and a memory coupled to the processor. For example, the memory may store information and/or instructions to cause the processor to function as one or more functional units as stated above with reference to FIG. 2. The processor may perform arithmetic, logic and/or control operations by accessing the memory.

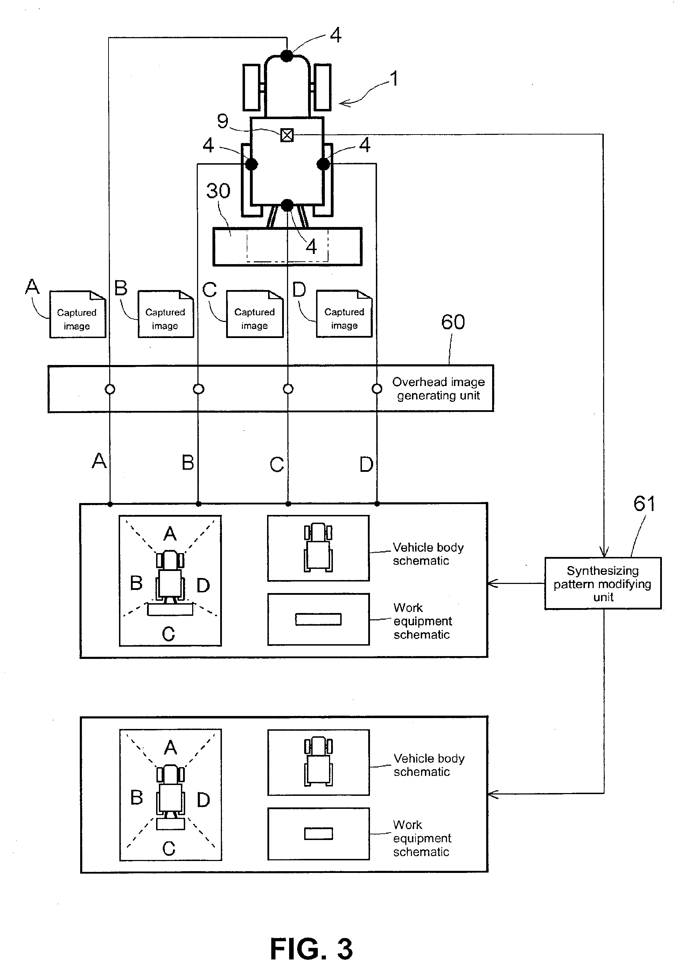

Next, an example of a flow of control for generating a peripheral overhead image from the four partial overhead images using a synthesizing pattern is described with reference to FIG. 3.

Captured images obtained by the four cameras 4 may be sent to the overhead image generating unit 60. In FIG. 3, the captured images from each of the cameras 4 are denoted by reference signs A to D in order to distinguish the captured images from each of the cameras 4. In the example shown in FIG. 3, the camera 4 for generating the captured image denoted by reference sign C has the peripheral area of the work equipment 30 as its field of view, and is configured to appropriately include the peripheral area of the work equipment 30 in its field of view, with regards to every size of the work equipment 30 that can be attached to the vehicle body 1. The four partial overhead images outputted from the overhead image generating unit 60 may be synthesized to join together by the image synthesizing unit 62 to form a peripheral overhead image. In the synthesis process, it may be important to use a synthesizing pattern with which a peripheral overhead image can be obtained such that the peripheral overhead image properly encompasses the peripheral area of the work equipment 30 attached to the vehicle body 1.

The image synthesizing unit 62 may further apply, in a central portion of the generated peripheral overhead image, a work vehicle schematic including a vehicle body schematic prepared beforehand and a work equipment schematic corresponding to the work equipment 30 attached to the vehicle body. The peripheral overhead image with the work vehicle schematic outputted from the image synthesizing unit 62 may be sent to a display image generating unit 56, converted to display image signals and sent to the touch panel 73 and/or one or more external displays.

The following is a list of examples in which the synthesizing pattern is modified by the synthesizing pattern modifying unit 61.
(1) The driver selects, using the touch panel 73, work equipment 30 attached to the vehicle body, and the synthesizing pattern modifying unit 61 selects a synthesizing pattern most suitable for the selected work equipment 30 and sends the selected synthesizing pattern to the image synthesizing unit 62.
(2) The driver selects an optimum peripheral overhead image from among peripheral overhead images displayed in order on the touch panel 73, and the synthesizing pattern modifying unit 61 selects a synthesizing pattern that generates the selected peripheral overhead image and sends the selected synthesizing pattern to the image synthesizing unit 62.

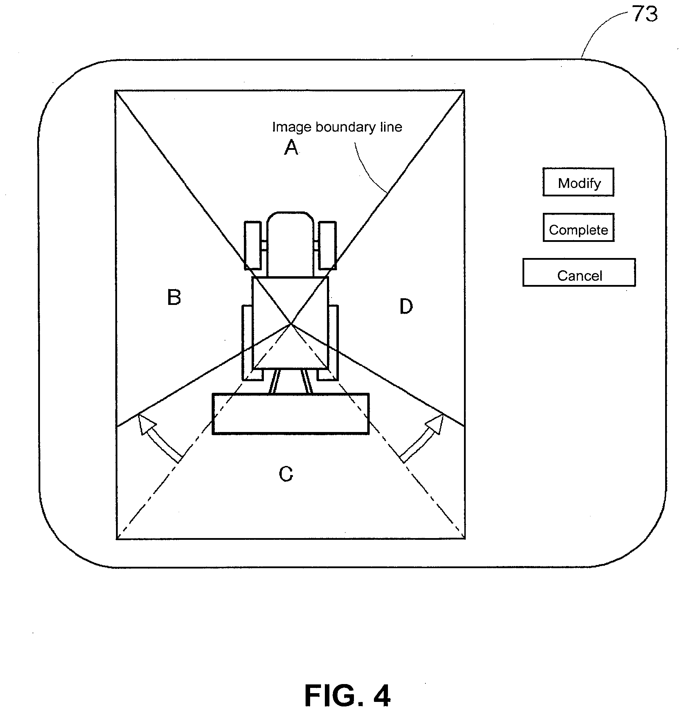

(3) FIG. 4 shows modification of a synthesizing pattern in an exemplary case where, in a peripheral overhead image displayed on the touch panel 73, both ends of the work equipment 30 are cut off in an area (denoted by the reference sign C) of the partial overhead image from the camera 4 that has, as its field of view, a peripheral area of the work equipment 30 with a width. By pressing a modify button of the touch panel 73, image boundary lines between the partial overhead images in the peripheral overhead image are displayed. When the driver moves the image boundary lines with a drag-and-drop operation, appropriate proportions of areas occupied by the partial overhead images are adjusted. When a complete button is pressed, the final positions of the image boundary lines are sent to the synthesizing pattern modifying unit 61 as modification commands. The synthesizing pattern modifying unit 61 then provides the image synthesizing unit 62 with a synthesizing pattern based on the positions of the adjusted image boundary lines.
(4) The synthesizing pattern modifying unit 61 selects an optimum synthesizing pattern based on the identification code of the work equipment 30 recognized by the recognition unit 83, and sends the pattern to the image synthesizing unit 62.
(5) When work equipment 30 in which the orientation and/or size thereof changes during the work operation is attached, for example, in case planting equipment of a foldable rice transplanter, tilling equipment and bucket equipment that is raised and lowered, and/or backhoe equipment that is raised, lowered, and rotated, is attached, the synthesizing pattern modifying unit 61 selects an optimum synthesizing pattern based on detection results of sensors (included in the working state detecting sensors 82) that detect changes in the orientation and/or size of the work equipment 30, and sends the selected synthesizing pattern to the image synthesizing unit 62.

One or more of these examples can be used in combination.

Use of a mapping table may be an effective way of performing image processing to generate a peripheral overhead image from captured images of a plurality of cameras 4 as stated above. The mapping table may be a table that associates pixels in each captured image with pixels in a peripheral overhead image. Further, if a mapping table has been prepared beforehand for each of the synthesizing patterns that are used, a peripheral overhead image can be promptly obtained even when the synthesizing pattern is modified.

### (Other Embodiments)

(1) In the embodiment described above, four cameras 4 are used for imaging the periphery of the work vehicle. However, in some examples, more than four cameras 4 may be used. Further, in some examples, a combination of one or more cameras 4 capturing at least the periphery of the work equipment 30 and one or more cameras 4 capturing something else may be used.

(2) In the embodiment described above, the peripheral overhead image generated by the monitoring image generating module 6 is displayed on a touch panel 73 in the vehicle and/or one or more other displays. However, in case the vehicle is traveling unmanned, the generated peripheral overhead image can be sent using wireless communication to a communication terminal (e.g. tablet or smartphone) carried by an observer and/or another work vehicle monitoring the unmanned work vehicle and can be displayed on a display (an example of a display unit) provided thereof. In this case, not only the peripheral overhead image but also the captured images and the partial overhead images may be sent. Further, when a tablet computer and/or management computer that is (are) able to exchange data with the control system of the work vehicle via the input/output signal processing unit 7 is used, a configuration can be adopted where the tablet computer and/or management computer is used for modifying the synthesizing patterns in the manner described above, in addition to displaying a monitoring image such as the peripheral overhead image. In this way, the synthesizing pattern can be modified as necessary to display a desired monitoring image such as a desired peripheral overhead image at a place distant from the work vehicle and a remote management center and/or a farmer's residence.

(3) Each of the functional units in the functional block diagram shown in FIG. 2 is differentiated for explanatory purposes. In reality, each of these functional units may be integrated with one or more other functional units or may be divided into a plurality of functional units. For example, the display image generating unit 56 may be integrated with the monitoring image generating module 6, and/or the synthesizing pattern modifying unit 61 may be separated from the monitoring image generating module 6.

(4) In the embodiment described above, the work vehicle is a tractor attached to work equipment 30 in the form of rotary tilling equipment. However, various other work vehicles may be employed as embodiments, for example, an agricultural vehicle such as a rice transplanter, fertilizer, or combine, or a construction vehicle equipped with a dozer and/or roller etc. as the work equipment 30, or the like.

### [Industrial Applicability]

The present invention can be applied to a work vehicle displaying an overhead image on a monitor using a plurality of cameras.

### [Reference Signs]

1: Vehicle body
4: Camera
30: Work equipment
31: Lifting mechanism
5: Control unit
50: Traveling control unit
53: Work control unit
54: Vehicle position calculating unit
56: Display image generating unit
57: Work site management unit
58: Course generating unit
6: Monitoring image generating module
60: Overhead image generating unit
61: Synthesizing pattern modifying unit
62: Image synthesizing unit
70: Satellite positioning module
73: Touch panel (display unit, input operation device)
74: Manual switching operation tool
8: Work vehicle sensors
81: Traveling state detecting sensors
82: Working state detecting sensors (usage state detecting sensors)
83: Recognition unit

## Claims

1. A work vehicle comprising a vehicle body (1) and work equipment (30) attached to the vehicle body (1), the work vehicle further comprising:
a plurality of cameras (4) configured to image partial peripheral areas allocated from a peripheral area of the vehicle body (1) and the work equipment (30);
a monitoring image generating module (6) configured to synthesize partial overhead images from each camera (4) on the basis of a modifiable synthesizing pattern, thereby generating a peripheral overhead image overlooking the peripheral area, the partial overhead images being generated by changing vantage points of captured images of the partial peripheral areas from each camera (4);
a synthesizing pattern modifying unit (61) configured to modify the synthesizing pattern; and
a display unit (73) configured to display the peripheral overhead image,
**characterized in that**
the work vehicle further comprises a recognition unit (83) configured to recognize a type of the work equipment (30); and
the synthesizing pattern modifying unit (61) is configured to modify the synthesizing pattern on the basis of one or more recognition results from the recognition unit (83).

2. A work vehicle according to claim 1, wherein the synthesizing pattern specifies occupied areas of the partial overhead images in the peripheral overhead image.

3. A work vehicle according to claim 1 or 2, wherein the synthesizing pattern modifying unit (61) is configured to modify the synthesizing pattern on the basis of one or more modification commands received from an input operation device (73).

4. A work vehicle according to claim 3, wherein the input operation device is a touch panel (73), and said one or more modification commands are generated by changing positions of image boundary lines between the partial overhead images in the peripheral overhead image displayed on the touch panel (73).

5. A work vehicle according to any one of claims 1 to 4, further comprising a usage state detecting sensor (81) configured to detect a usage state of the work equipment (30),
wherein the synthesizing pattern modifying unit (61) is configured to modify the synthesizing pattern on the basis of one or more detection results from the usage state detecting sensor (81).

6. A work vehicle according to any one of claims 1 to 5, wherein a work vehicle schematic is provided in a center of the peripheral overhead image, the work vehicle schematic including a vehicle body schematic showing the vehicle body (1) and a work equipment schematic showing the work equipment (30), and wherein a size of the work equipment schematic is modified as the synthesizing pattern is modified.

7. A method for generating a peripheral overhead image overlooking a peripheral area of a vehicle body (1) and work equipment (30) attached to the vehicle body, the method comprising:
receiving, by a control unit (5) from a plurality of cameras (4) attached to the vehicle body (1), captured images of partial peripheral areas allocated from the peripheral area of the vehicle body (1) and the work equipment (30);
generating, by the control unit (5), partial overhead images from each camera (4) by changing vantage points of the captured images of the partial peripheral areas from each camera (4);
synthesizing, by the control unit (5), the partial overhead images from each camera (4) on the basis of a modifiable synthesizing pattern, thereby generating a peripheral overhead image overlooking the peripheral area;
providing the peripheral overhead image from the control unit (5) to a display unit (73) for displaying the peripheral overhead image on the display unit (73);
modifying the synthesizing pattern, by the control unit (5), on the basis of one or more recognition results from a recognition unit (83) that is comprised in the work vehicle and that is configured to recognize a type of the work equipment (30); and
generating, by the control unit (5), a modified peripheral overhead image overlooking the peripheral area by synthesizing the partial overhead images from each camera on the basis of the modified synthesizing pattern.

8. A computer program product comprising computer-readable instructions to cause the work vehicle of claim 1 to perform the method according to claim 7.

## Patentansprüche

1. Arbeitsfahrzeug, welches eine Fahrzeugkarosserie (1) und eine an der Fahrzeugkarosserie (1) angebrachte Arbeitsausrüstung (30) aufweist, wobei das Arbeitsfahrzeug ferner aufweist:
mehrere Kameras (4), die konfiguriert sind, periphere Teilbereiche abzubilden, die von einem peripheren Bereich der Fahrzeugkarosserie (1) und der Arbeitsausrüstung (30) zugeordnet wurden;
ein Überwachungsbilderzeugungsmodul (6), das konfiguriert ist, Teil-Overhead-Bilder von jeder Kamera (4) auf der Grundlage eines modifizierbaren Synthesemusters zu synthetisieren, wodurch ein peripheres Overhead-Bild erzeugt wird, das den peripheren Bereich überblickt, wobei die Teil-Overhead-Bilder durch Ändern von Aussichtspunkten von erfassten Bildern der peripheren Teilbereiche von jeder Kamera (4) erzeugt werden;
eine Synthesemuster-Modifizierungsvorrichtung (61), die konfiguriert ist, das Synthesemuster zu modifizieren; und
eine Anzeigeeinheit (73), die konfiguriert ist, das periphere Overhead-Bild anzuzeigen, **dadurch gekennzeichnet, dass** das Arbeitsfahrzeug ferner eine Erkennungseinheit (83) umfasst, die konfiguriert ist, einen Typ der Arbeitsausrüstung (30) zu erkennen; und
die Synthesemuster-Modifizierungsvorrichtung (61) konfiguriert ist, das Synthesemuster auf der Grundlage eines oder mehrerer Erkennungsergebnisse von der Erkennungseinheit (83) zu modifizieren.

2. Arbeitsfahrzeug nach Anspruch 1, wobei das Synthesemuster besetzte Bereiche der Teil-Overhead-Bilder im peripheren Overhead-Bild angibt.

3. Arbeitsfahrzeug nach Anspruch 1 oder 2, wobei die Synthesemuster-Modifizierungsvorrichtung (61) konfiguriert ist, das Synthesemuster auf der Grundlage eines Modifizierungsbefehls oder mehrerer Modifizierungsbefehle, die von einer Eingabebedienungsvorrichtung (73) empfangen werden, zu modifizieren.

4. Arbeitsfahrzeug nach Anspruch 3, wobei die Eingabe-Bedienungsvorrichtung ein Touch Panel (73) ist und der eine oder die mehreren Modifizierungsbefehle durch Ändern von Positionen von Bildgrenzlinien zwischen den Teil-Overhead-Bildern in dem auf dem Touch Panel (73) angezeigten peripheren Overhead-Bild erzeugt werden.

5. Arbeitsfahrzeug nach einem der Ansprüche 1 bis 4, ferner aufweisend einen Nutzungszustandserfassungssensor (81), der konfiguriert ist, einen Nutzungszustand der Arbeitsausrüstung (30) zu erfassen,
wobei die Synthesemuster-Modifizierungsvorrichtung (61) konfiguriert ist, das Synthesemuster auf der Grundlage von einem oder mehreren Erfassungsergebnissen von dem Nutzungszustanderfassungssensor (81) zu modifizieren.

6. Arbeitsfahrzeug nach einem der Ansprüche 1 bis 5, wobei ein Arbeitsfahrzeug-Schema in einer Mitte des peripheren Overhead-Bildes vorgesehen ist, wobei das Arbeitsfahrzeug-Schema ein Karosserie-Schema, das die Fahrzeugkarosserie (1) zeigt, und ein Arbeitsausrüstungs-Schema, das die Arbeitsausrüstung (30) zeigt, enthält, und wobei eine Größe des Arbeitsausrüstungs-Schemas modifiziert wird, wenn das Synthesemuster modifiziert wird.

7. Verfahren zum Erzeugen eines peripheren Overhead-Bildes, das einen peripheren Bereich einer Fahrzeugkarosserie (1) und einer an der Fahrzeugkarosserie angebrachten Arbeitsausrüstung (30) überblickt, wobei das Verfahren umfasst:
durch eine Steuereinheit (5) Empfangen von erfassten Bildern von mehreren an der Fahrzeugkarosserie (1) angebrachten Kameras (4) von peripheren Teilbereichen, die von dem peripheren Bereich der Fahrzeugkarosserie (1) und der Arbeitsausrüstung (30) zugeordnet wurden;
durch die Steuereinheit (5) Erzeugen von Teil-Overhead-Bildern von jeder Kamera (4), indem die Aussichtspunkte der erfassten Bilder der peripheren Teilbereiche von jeder Kamera (4) geändert werden;
durch die Steuereinheit (5) Synthetisieren der Teil-Overhead-Bilder von jeder Kamera (4) auf der Grundlage eines modifizierbaren Synthesemusters, wodurch ein peripheres Overhead-Bild erzeugt wird, das den peripheren Bereich überblickt;
von der Steuereinheit (5) Bereitstellen des peripheren Overhead-Bildes an eine Anzeigeeinheit (73) zum Anzeigen des peripheren Overhead-Bildes auf der Anzeigeeinheit (73);
durch die Steuereinheit (5) Modifizieren des Synthesemusters auf der Grundlage eines oder mehrerer Erkennungsergebnisse von einer Erkennungseinheit (83), die in dem Arbeitsfahrzeug enthalten ist und die konfiguriert ist, einen Typ der Arbeitsausrüstung (30) zu erkennen;
und durch die Steuereinheit (5) Erzeugen eines modifizierten peripheren Overhead-Bildes, das den peripheren Bereich überblickt, indem die Teil-Overhead-Bilder von jeder Kamera auf der Grundlage des modifizierten Synthesemusters synthetisiert werden.

8. Computerprogrammprodukt, welches computerlesbare Befehle aufweist, um das Arbeitsfahrzeug nach Anspruch 1 zu veranlassen, das Verfahren nach Anspruch 7 durchzuführen.

## Revendications

1. Véhicule de travail comprenant une carrosserie (1) et un équipement de travail (30) fixé à la carrosserie (1), le véhicule de travail comprenant en outre :
une pluralité d'appareils de prise de vues (4) conçus pour imager des zones périphériques partielles réparties sur une zone périphérique de la carrosserie (1) et de l'équipement de travail (30) ;
un module (6) de production d'images de surveillance, conçu pour synthétiser les images aériennes partielles en provenance de chaque appareil de prise de vues (4) en fonction d'un modèle de synthétisation modifiable, produisant ainsi une image aérienne périphérique surplombant la zone périphérique, les images aériennes partielles étant produites au moyen de la variation des points de vue privilégiés des images capturées des zones périphériques partielles en provenance de chaque appareil de prise de vues (4) ;
une unité (61) de modification de modèle de synthétisation, conçue pour modifier le modèle de synthétisation ; et
une unité d'affichage (73), conçue pour afficher l'image aérienne périphérique,
**caractérisé en ce que**
le véhicule de travail comprend en outre une unité de reconnaissance (83), conçue pour reconnaître un type de l'équipement de travail (30) ; et
l'unité (61) de modification de modèle de synthétisation est conçue pour modifier le modèle de synthétisation en fonction d'un ou plusieurs résultats de reconnaissance en provenance de l'unité de reconnaissance (83).

2. Un véhicule de travail selon la revendication 1, dans lequel le modèle de synthétisation spécifie les zones occupées des images aériennes partielles dans l'image aérienne périphérique.

3. Un véhicule de travail selon les revendications 1 ou 2, dans lequel l'unité (61) de modification de modèle de synthétisation est conçue pour modifier le modèle de synthétisation en fonction d'une ou plusieurs commandes de modification reçues à partir d'un dispositif opérationnel de saisie (73).

4. Un véhicule de travail selon la revendication 3, dans lequel le dispositif opérationnel de saisie est un panneau tactile (73), et la ou les commandes de modification sont produites au moyen de la variation des positions des lignes de délimitation des images, entre les images aériennes partielles, dans l'image aérienne périphérique affichée sur le panneau tactile (73).

5. Un véhicule de travail selon l'une quelconque des revendications 1 à 4, comprenant en outre un capteur (81) de détection d'état d'utilisation, conçu pour détecter un état d'utilisation de l'équipement de travail (30),
dans lequel l'unité (61) de modification de modèle de synthétisation est conçue pour modifier le modèle de synthétisation en fonction d'un ou plusieurs résultats de détection en provenance du capteur (81) de détection d'état d'utilisation.

6. Un véhicule de travail selon l'une quelconque des revendications 1 à 5, dans lequel un schéma du véhicule de travail est fourni dans un centre de l'image aérienne périphérique, le schéma du véhicule de travail comprenant un schéma de carrosserie montrant la carrosserie (1), et un schéma d'équipement de travail montrant l'équipement de travail (30), et dans lequel une dimension du schéma d'équipement de travail est modifiée à mesure que le modèle de synthétisation est modifié.

7. Procédé de production d'une image aérienne périphérique surplombant une zone périphérique d'une carrosserie (1) d'un véhicule, et d'un équipement de travail (30) fixé à la carrosserie, le procédé comprenant :
la réception, par une unité de commande (5), à partir d'une pluralité d'appareils de prise de vues (4) fixés à la carrosserie (1), d'images capturées de zones périphériques partielles réparties sur la zone périphérique de la carrosserie (1) et de l'équipement de travail (30) ;
la production, par l'unité de commande (5), d'images aériennes partielles en provenance de chaque appareil de prise de vues (4), au moyen de la variation des points de vue privilégiés des images capturées des zones périphériques partielles en provenance de chaque appareil de prise de vues (4) ;
la synthétisation, par l'unité de commande (5), des images aériennes partielles en provenance de chaque appareil de prise de vues (4), en fonction d'un modèle de synthétisation modifiable, produisant ainsi une image aérienne périphérique surplombant la zone périphérique ;
l'apport de l'image aérienne périphérique en provenance de l'unité de commande (5) à une unité d'affichage (73), afin d'afficher l'image aérienne périphérique sur l'unité d'affichage (73) ;
la modification du modèle de synthétisation, par l'unité de commande (5), en fonction d'un ou plusieurs résultats de reconnaissance en provenance d'une unité de reconnaissance (83) comprise dans le véhicule de travail et conçue pour reconnaître un type de l'équipement de travail (30) ; et
la production, par l'unité de commande (5), d'une image aérienne périphérique modifiée surplombant la zone périphérique, au moyen de la synthétisation des images aériennes partielles en provenance de chaque appareil de prise de vues en fonction du modèle de synthétisation modifié.

8. Produit programme informatique comprenant des instructions lisibles par ordinateur destinées à amener le véhicule de travail de la revendication 1 à effectuer le procédé selon la revendication 7.
